# NEUE EUROPÄISCHE PATENTSCHRIFT

(11) **EP 3 626 135 B2**
(45) Veröffentlichungstag und Bekanntmachung des Hinweises auf die Entscheidung über den Einspruch: **01.10.2025**
(45) Hinweis auf die Patenterteilung: 29.06.2022
(21) Anmeldenummer: 19194508.8
(22) Anmeldetag: 30.08.2019
(51) Int. Cl.: A47J 31/00, A47J 31/46

(54) **HEISSGETRÄNKEBEREITER MIT STEUEREINRICHTUNG**
HOT BEVERAGE PREPARATION DEVICE WITH CONTROL DEVICE
APPAREIL POUR PRÉPARER DES BOISSONS CHAUDES AYANT UN DISPOSITIF DE COMMANDE

(30) Priorität: 24.09.2018 DE 102018123364
(43) Veröffentlichungstag der Anmeldung: 25.03.2020
(73) Patentinhaber: Miele & Cie. KG, 33332 Gütersloh (DE)
(72) Erfinder: Schnelle, Axel, 33106 Paderborn (DE); Paletta, Marlene, 33659 Bielefeld (DE)

(56) Entgegenhaltungen:
- EP-A1- 3 192 411
- WO-A1-2009/032911
- WO-A1-2013/098173
- WO-A1-2015/058531
- WO-A1-2015/062272
- WO-A1-2015/138980
- WO-A1-2016/132412
- WO-A1-2017/174399
- WO-A1-2018/162440
- WO-A2-2005/079639
- DE-A1- 102013 212 349
- DE-A1- 102016 104 020
- US-A1- 2005 011 364
- FOLMER BRITTA (ED.): "The Craft and Science of Coffee", 1 January 2017, ISBN: 978-0-12-803520-7, pages: 363 - 380, XP093038073

## Beschreibung

Die Erfindung betrifft einen Heißgetränkebereiter mit einem Strömungsleitungssystem mit
- einer Wasserquelle;
- einer Brüheinheit, wobei die Brüheinheit eine Brühkammer zur Aufnahme von aufzubrühendem Brühgut und einer Einlassleitung zum Einlassen von Brühwasser in die Brühkammer,
- eine Heizeinrichtung zum Erhitzen des der Brühkammer zugeführten Wassers
- eine Pumpe, die dazu ausgebildet ist, das Wasser aus der Quelle zur Brühkammer zu fördern,
- eine Steuereinrichtung zur Aktivierung und Deaktivierung der genannten Aktoren zur Zubereitung eines ausgewählten Getränks.

Eine derartige Kaffeemaschine ist aus der WO 2017/050968 A1 bekannt. Die bekannte Kaffeemaschine gehört zu denjenigen Kaffeemaschinen, die in der Lage sind, wenigstens zwei verschiedene Sorten Kaffeegetränk herzustellen und auszugeben; insbesondere sind dies Kaffeegetränke vom Filterkaffeetyp und Kaffeegetränke vom Espressotyp. Die beiden Kaffeegetränke unterscheiden sich neben der vorzugsweisen Verwendung verschiedener Sorten von Kaffeebohnen, durch einen unterschiedlichen Brühdruck, Ferner ist die Pumpe mit verschiedenen Durchflussraten einstellbar, die von dem Brühdruck abhängig sind. Hierbei wird in einem Brühvorgang mit einer ersten Durchflussrate begonnen und anhand eines erfassten Drucks in der Leitung eine zweite Durchflussrate eingestellt. Hierbei kann es jedoch vorkommen, dass die zuerst eingestellt Durchflussrate, die letztendlich als erste Ist-Größe herangezogen wird, nicht optimal für das aufzubrühende Pulver ist. Ferner sind hier noch nicht alle Eigenschaften des Pulvers hinreichend berücksichtigt, um ein optimales Brühergebnis zu erhalten.

Die EP 3 192 411 A1 beschreibt und zeigt einen Getränkebereiter mit einem Strömungsleitungssystem und weiteren Komponenten, die zum automatischen Zubereiten eines Heißgetränks notwendig sind. Der in der EP 3 192 411 A1 vorgestellte Getränkebereiter umfasst eine automatische Reinigungsvorrichtung zum Reinigen des Strömungsleitungssystems, insbesondere zum Reinigen der Brühkammer, wobei während des Reinigungsprozesses unterschiedliche Pumpenleistungen gefahren werden, um die Reinigerzusätze optimal in die Leitungsbereiche zu führen.

Der Erfindung liegt somit die Aufgabe zu Grunde, einen Heißgetränkebereiter dahingehend weiterzubilden, dass eine Vielzahl von unterschiedlichen Brühgetränken optimal zubereitet werden können. Insgesamt soll das Brühergebnis verbessert werden.

Erfindungsgemäß wird unter anderem diese Aufgabe durch einen Heißgetränkebereiter mit den Merkmalen des unabhängigen Anspruchs 1 gelöst. Vorteilhafte Ausgestaltungen und Weiterbildungen der Erfindung ergeben sich aus den abhängigen Ansprüchen.

Ein mit der Erfindung erreichbarer Vorteil besteht darin, dass die geräteseitig oder steuerungsseitig voreingestellten Getränke hinsichtlich des Brühprozesses nahezu beliebig verändert oder nachjustiert werden können. Hierbei wird der Durchfluss, der für das zu bereitende Getränk ein wesentlicher Parameter ist, manipuliert bzw. für die verwendete Bohnensorte optimal eingestellt.

Um diese Vorteile auf einfache Weise zu erreichen, ist die Steuereinrichtung dazu eingerichtet, die Pumpe derart zu aktivieren, dass sich eine vorbestimmte Durchflussgeschwindigkeit aus einer Auswahl von verschiedenen Durchflussgeschwindigkeiten einstellt. Das bedeutet, dass die Pumpenleistung ml/min von der Steuereinrichtung eingestellt, also erhöht oder vermindert werden kann, je nach Anforderung. Die Anforderung, aufgrund der die Einstellung der Pumpenleistung oder Durchflussgeschwindigkeit erfolgt, ergibt in erster Linie aus dem Getränk selbst, also normaler Kaffee, Espresso, Cappuccino, Americano oder sonstige Kaffeespezialitäten. Als weitere Kriterien kommen die Eigenschaften der Kaffeebohne selbst, der Mahlgrad und Geschmackseigenschaften, wie beispielsweise bitter, sauer, ausgewogen hinzu.

In einer zweckmäßigen Ausführung sind für die Auswahl Durchflussgeschwindigkeiten vorgesehen, die im Bereich von 0,5 ml/sek bis 8 ml/sek liegen. Die Auswahl geschieht dabei bevorzugt in Stufen, kann aber auch in sehr kleinen Stufen und damit quasi kontinuierlich erfolgen. Die anhand der Vorgaben ausgewählte oder bestimmte Durchflussgeschwindigkeit wird für den gesamten Brühprozess aufrechterhalten bzw. als Sollwert für eine Regelung beibehalten. In einer etwas einfacheren Ausgestaltung der Erfindung beträgt die einstellbare Bandbreite für die Durchflussgeschwindigkeit der Pumpe 1 ml/s bis 8 ml/s.

In einer insgesamt zweckmäßigen Ausführung ist die Steuereinrichtung dazu eingerichtet und programmiert, die Durchflussgeschwindigkeit abhängig von Geschmackseigenschaften einzustellen. Mit diesen Angaben, die das gewünschte Geschmacksergebnis betreffen, wird die für das ausgewählte Geschmacksergebnis optimale oder vorbestimmte Durchflussgeschwindigkeit eingestellt.

Insgesamt ist die Steuereinrichtung dazu eingerichtet, die Durchflussgeschwindigkeit abhängig von der vorbestimmten Wassermenge für das ausgewählte Getränk einzustellen, um die vorbestimmte Kontaktzeit zum optimalen Brühergebnis stets einzuhalten. Diese ist wiederrum von der Kaffeesorte, die auch den Röstgrad mit beinhaltet, sowie vom Mahlgrad abhängig. Die für die verwendete Kaffeesorte und den Mahlgrad optimal vorgegebene Kontaktzeit liegt dabei in einem Bereich von 10 Sekunden bis zu 2 Minuten, wobei mittels der exakt eingestellten Durchflussgeschwindigkeit die jeweils optimale Kontaktzeit oder Brühzeit eingehalten wird, ggf. mit einem Toleranzbereich vorn +- 2 Sekunden. Bei einem Getränk mit viel Wasser, beispielsweise einem normalen Kaffee werden etwa 150 ml mit 7,5 ml/s gefördert, also für die Zeit von 20 Sekunden durch die Brühkammer mit dem darin vorgehaltenen Kaffeepulver gepumpt. Bei einem Espresso werden dagegen nur 25 ml bis 30 ml Wasser in der vorbestimmten Zeit durch das in der Brühkammer vorgehaltene Kaffeepulver gepumpt, sodass für dieses Getränk eine Durchflussgeschwindigkeit von 1,3 bis 1,8 ml/s eingestellt werden.

In einer Ausführung des Heißgetränkebereiters mit einem Mahlwerk zum Mahlen von Kaffeebohnen, um das Kaffeepulver der Brühkammer zuzuführen, ist die Steuereinrichtung dazu eingerichtet, die Durchflussgeschwindigkeit abhängig vom Mahlgrad einzustellen. Hierbei kann auch zusätzlich das gewünschte Geschmacksergebnis, wie vorstehend genannt, mitberücksichtigt werden. Bei einem feinen Mahlgrad wird dabei bevorzugt die Durchflussgeschwindigkeit erhöht und bei groben Mahlgrad beispielsweise vermindert, um möglichst wenig Bitterstoffe aus dem Kaffeepulver herauszulösen. Insgesamt ist die Durchflussgeschwindigkeit so eingestellt, dass die vollständige Füllmenge für das jeweils ausgewählte Getränk in der für das Getränk bereitgestellten Kaffeepulver vorgesehenen Kontaktzeit erreicht ist, beispielsweise eine Kontaktzeit im Bereich von 15 bis 30 Sekunden, bevorzugt im Bereich von 18 Sekunden bis 22 Sekunden bereitgestellt wird.

Speziell ist die Steuereinrichtung dazu eingerichtet, die Durchflussgeschwindigkeit von der Kaffeesorte abhängig einzustellen. Die Kaffeesorte wird dabei der Steuereinrichtung durch eine Bedieneinrichtung bekanntgegeben. Die Steuereinrichtung stellt dann die Durchflussgeschwindigkeit für die Pumpe so ein, dass die Kontaktzeit für die zu fördernde Wassermenge eingehalten wird.

In einer weiteren bevorzugten Ausführung ist die Bedien- und Anzeigevorrichtung ausgebildet, um die Eingaben zur Auswahl des zuzubereitenden Getränks, den Geschmackseigenschaften, Mahlgrad, Kaffeesorte, und/oder Wassermenge für den Benutzer bereitzustellen, wobei die Bedien-und Anzeigevorrichtung zur Übergabe der genannten Informationen mit der Steuereinrichtung in Verbindung steht. Aufgrund dieser Eingaben wird die Durchflussgeschwindigkeit wird anhand von mehreren Bewertungsindizes festgelegt, wobei jeweils ein Bewertungsindex für eine oder mehrere der folgenden Eigenschaften vorgesehen ist:
- Geschmackseigenschaft
- Mahlgrad
- Kaffeesorte
- Wassermenge.
Damit werden mehrere Faktoren in Kombination zur Festlegung der Durchflussgeschwindigkeit herangezogen, sodass ein optimales und vom Benutzer gewünschtes Geschmacksresultat, wie es für die jeweilige Bohnensorte möglich ist, erreicht wird.

Damit werden mehrere Faktoren in Kombination zur Festlegung der

Durchflussgeschwindigkeit herangezogen, sodass ein optimales und vom Benutzer gewünschtes Geschmacksresultat, wie es für die jeweilige Bohnensorte möglich ist, erreicht wird.

In einer zweckmäßigen Weiterbildung umfasst die Steuereinrichtung Tabelle, mathematisches Modell oder eine Berechnungsformel, um anhand der Eingabeinformationen den jeweiligen Bewertungsindex und die daraus resultierende Durchflussgeschwindigkeit zu erzeugen. Das bedeutet, dass die einzelnen Indizes als Kennlinie im Speicher der Steuereinrichtung abgelegt sind, wobei aufgrund von Mittelwertbildung oder einer Summenbildung der Gesamtindex zur Vorgabe oder zum Einstellen der Durchflussgeschwindigkeit erzeugt wird. Für alle Ausführungen gilt, dass die Festlegung der Durchflussgeschwindigkeit vor dem Aufbrühen erfolgt. Damit ist sichergestellt, dass zum Aufbrühen die optimale Kontaktzeit wie bereits vorstehend genannt, zur Erzielung des besten Geschmacksergebnisses sehr genau eingehalten wird.

In einer anderen Ausführung der Weiterbildung umfasst die Steuereinrichtung ein Datenübertragungsmittel zum Senden der Eingabeinformationen an eine entfernte Datenverarbeitungseinheit und zum Empfangen von Bewertungsindizes oder bereits errechneten Gesamtindex, wobei die Steuereinrichtung dazu ausgebildet ist, aufgrund des empfangenen Bewertungsindex oder Gesamtindex die dazu korrespondierende Pumpenleistung bzw. Durchflussgeschwindigkeit für die nachfolgende Getränkezubereitung entsprechend einzustellen. Damit werden die Mittel zur Bewertung der Eingabeinformationen ausgelagert an einen externen Server oder Cloud, sodass die Steuereinrichtung bzw. der Speicher der Steuereinrichtung nicht mit den dafür notwendigen Daten belastet wird.

Die Erfindung betrifft ferner ein System, umfassend einen Heißgetränkebereiter, wie vorstehend genannt, und ein Datenverarbeitungsgerät, wobei die Steuereinrichtung ein Datenübertragungsmittel zum Senden der Eingabeinformationen an eine entfernte Datenverarbeitungseinheit und zum Empfangen von Bewertungsindizes und/oder einem Gesamtindex umfasst, wobei die Datenverarbeitungseinheit dazu ausgebildet ist, anhand der empfangenen Eingabeinformationen einen Bewertungsindex oder einen Gesamtindex zu erzeugen und diesen an die Steuereinrichtung zu senden und wobei die Steuereinrichtung dazu ausgebildet ist, aufgrund des empfangenen Bewertungsindex oder Gesamtindex die Pumpenleistung bzw. Durchflussgeschwindigkeit für die nachfolgende Getränkezubereitung entsprechend einzustellen. Damit wird ein großer Anteil an vorzuhaltenden Daten aus der Steuereinrichtung ausgelagert. Auch Änderungen oder Ergänzungen der Datensatz sind einfach vorzunehmen, weil diese an einem Gerät, nämlich dem externen Datenserver, vorgenommen werden müssen.

In einer bevorzugten Weiterbildung umfasst das System ein externes Gerät mit einer Bedien-und Anzeigevorrichtung zur Bereitstellung von Eingaben zu den Geschmackseigenschaften, Mahlgrad, Kaffeesorte und/oder Wassermenge, wobei das externe Gerät ein Datenübertragungsmittel zum Senden der Eingabeinformationen an eine entfernte Datenverarbeitungseinheit und zum Empfangen von Bewertungsindizes oder einem Gesamtindex umfasst, wobei die entfernte Datenverarbeitungseinheit dazu ausgebildet ist, anhand der empfangenen Eingabeinformationen einen Bewertungsindex oder einen Gesamtindex zu erzeugen und diesen an das externe Gerät zu senden und wobei die wobei die Steuereinrichtung ein Schnittstellenmittel zum Empfangen der Bewertungsindizes oder des Bewertungsindex von dem externen Gerät umfasst, zum Einstellen der Pumpenleistung bzw. Durchflussgeschwindigkeit. Als externes Bediengerät dient dabei ein Smartphone oder Tablet-PC, wobei die Bedienhandlungen bequem am externen Gerät vorgenommen werden können, um dann unmittelbar vor dem Aufbrühen alle Parameter, die aufgrund der Bedienung bereits im externen Gerät generiert wurden, an die Steuereinrichtung übertragen werden. Der Heißgetränkebereiter benötigt im System dabei keine oder nur eine sehr spartanische Bedien- und Anzeigevorrichtung.

In einer insgesamt zweckmäßigen Ausführung des Systems umfasst die externe Datenverarbeitungseinheit eine Tabelle, mathematisches Modell oder eine Berechnungsformel umfasst, um anhand der Eingabeinformationen den Bewertungsindex zu erzeugen.

Ein Ausführungsbeispiel der Erfindung ist in den Zeichnungen rein schematisch dargestellt und wird nachfolgend näher beschrieben. Es zeigen
- Fig. 1:: einen Heißgetränkebereiter in einer teilweise schematischen Schnittdarstellung;
- Fig. 2:: einen vereinfachten Schaltplan des Strömungsleitungssystems;
- Fig. 3:: ein Diagramm zur Darstellung der Durchflussgeschwindigkeit und
- Fig. 4:: ein System mit Getränkebereiter, externem Gerät und entferner Datenverarbeitungseinheit.

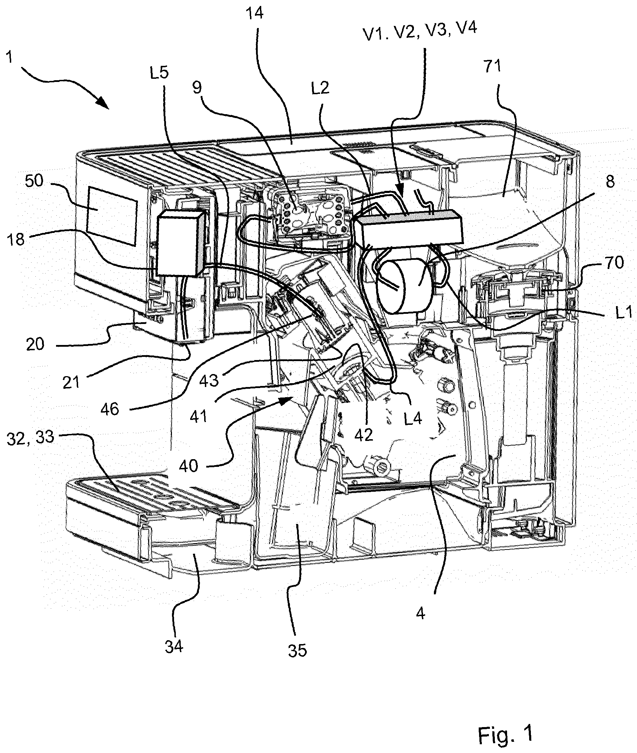

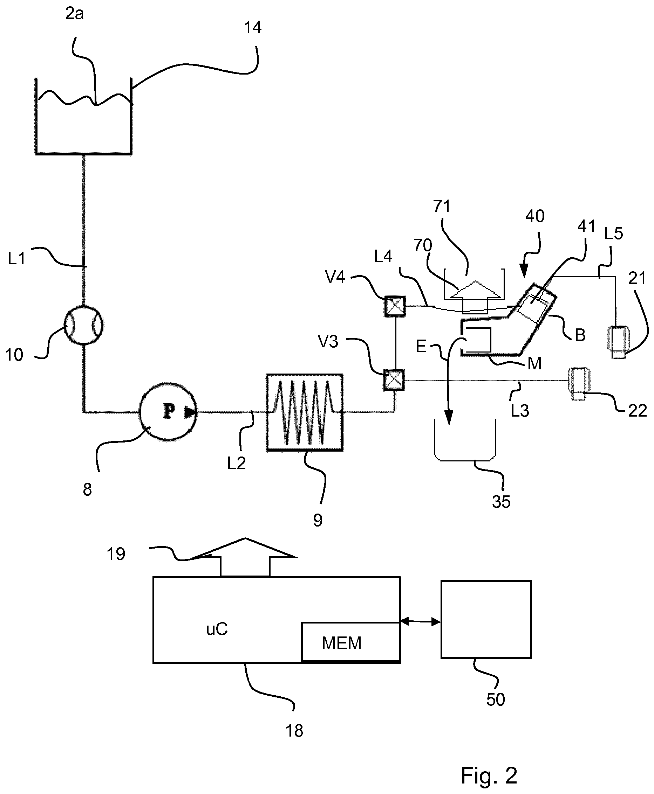

Die Fig.1 zeigt am Beispiel eines als Standgerät ausgebildeten Heißgetränkebereiter 1 mit allen relevanten Komponenten für die Zubereitung eines Heißgetränks. Der Getränkebereiter 1 umfasst unter anderem ein Gehäuse 11, in dem der Vorratsbehälter 71 für Kaffeebohnen mit darunter angebrachtem Mahlwerk 70 mit Motor, den Wasserbehälter 14 sowie die Möglichkeit, der Unterbringung des Strömungsleitungssystems 2. Im Frontbereich des Heißgetränkebereiter 1 verfügt dieser über einen höhenbeweglichen Auslass 20, in dem mehrere Entnahmeeinrichtungen, hier Auslassdüsen 21, 22 untergebracht sind. Bei der Entnahmeeinrichtung 22 handelt es sich im vorliegenden Fall um eine Dampfdüse zur Abgabe heißen Wasserdampfes oder heißem Wasser, beispielsweise zur Verdünnung eines fertigen Kaffees oder zur Zubereitung eines Teegetränks. Die Entnahmeeinrichtung 21 stellt eine Ausgabeleitung oder Ausgabedüse 21 zur Abgabe von Kaffeegetränken dar. Eine Brüheinheit 40 mit einer Brühkammer 41 im Inneren des Gerätes 1 dient zur Zubereitung des Getränkes, wobei in die Brühkammer 41 das Kaffeepulver eingebracht und anschließend mit heißem Wasser durchflutet wird, sodass zur Ausgabeleitung und durch die Ausgabedüse 21 das fertige Kaffeegetränk ausgegeben wird. Bei dieser Ausführung sind die Ausgabedüsen 21, 22 in der Höhe verschiebbar angeordnet, so dass sie der Höhe eines auf der Abstellfläche 33 abgestellten Trinkgefäßes angepasst werden kann, ohne dass bei der Abgabe des Getränkes ein Verspritzen erfolgt. Den oberen Abschluss der Abstellfläche 33 bildet ein Abtropfblech 32, das mit Öffnungen und Schlitzen versehen ist, um Flüssigkeitsreste in einer unterhalb des Abtropfbleches 32 vorhandenen Auffangschale 34 abzuführen. Ferner umfasst der Heißgetränkebereiter 1 einen Tresterbehälter 35, in den die aufgebrauchte Substanz, beispielsweise Kaffeekuchen, nach Vollendung der Getränkezubereitung hineingeworfen wird. Das Gerät 1 umfasst ferner eine Steuereinrichtung 18, die dazu eingerichtet ist, die einzelnen Funktionsbaugruppen, wie Pumpen 8, Ventile V1 bis V4 und Heizeinrichtung 9 und Mahlwerk 70, soweit vorhanden, zu steuern, wie es für die Zubereitung des jeweils ausgewählten Getränkes notwendig ist. Die Steuereinrichtung 18, die als Mikrocontroller uC mit einem zugeordneten Speicher MEM ausgeführt ist (Fig. 2), ist in dieser Ausführung ferner dazu eingerichtet, die Ventile V1, V2 des Strömungsleitungssystems 2 so anzusteuern, dass das heiße Wasser durch die Brühkammer 41, gepumpt wird. Außenseitig an der Frontwand des Gehäuses 11 ist die Bedien- und Anzeigevorrichtung 50 angeordnet, in diesem Beispiel ist sie mit Touchflächen und einem Display oder als Berührbildschirm ausgebildet, um Eingaben bezüglich der Getränkeauswahl und zusätzliche Einstellungen hinsichtlich Wassermenge, Geschmack Stärke oder Bohnensorte bereitzustellen. Die Bedien- und Anzeigevorrichtung 50 steht dabei datentechnisch mit der Steuereinrichtung 18 bzw. mit dem dort vorhandenem Mikroprozessor uC in Verbindung (Fig. 2)

Fig. 2 zeigt einen vereinfachten Schaltplan eines Strömungsleitungssystems 2 innerhalb eines Getränkeautomaten 1. Von einer Wasserquelle 14, in diesem Beispiel ein Wassertank, wird das Strömungsleitungssystem 2 mit frischem Wasser versorgt. Das Strömungsleitungssystem 2 umfasst dabei Leitungsabschnitte und Komponenten, die zur Zubereitung von Getränken dienen. Zur Erzeugung der Strömung innerhalb des Strömungsleitungssystems 2 sowie des erforderlichen Druckaufbaus dient eine Pumpe 8. Darüber hinaus weist der zur Zubereitung der Getränke genutzte Teil des Strömungsleitungssystems 2 eine Heizeinrichtung 9 zur Erwärmung des Wassers 2a sowie mehrere Entnahmeeinrichtungen 21, 22, sowie Leitungsabschnitte L1, L2, L3, L3 zur Verbindung der einzelnen Komponenten miteinander auf, wobei die Dampfdüse 22 zur Ausgabe von Dampf und zur Ausgabe von heißem Wasser und/oder die Kaffeedüse 21 zur Ausgabe des zubereiteten Kaffeegetränkes oder Teegetränkes, je nachdem, welches Pulver oder Substrat der Brühkammer 41 zugeführt wurde, vorgesehen ist. Zur selektiven Ansteuerung der Entnahmeeinrichtungen 21, 22 dienen die Mehrwegeventile V3 und V4, die den Entnahmeeinrichtungen 21, bzw. der Brühkammer 41 in Strömungsrichtung betrachtet vorgeschaltet sind. Darüber hinaus kann das Strömungsleitungssystem 2 ein Messgerät zur Volumenstrommessung, das als Flowmeter 10 bezeichnet wird, aufweisen, das hilfreich ist, um eine genaue Menge frischen Wassers zu bestimmen, die für die Zubereitung eines Getränkes erforderlich ist. Darüber hinaus lässt sich mit einer derartigen Messeinrichtung 10 auch die Anzahl der hergestellten Getränke bestimmen.

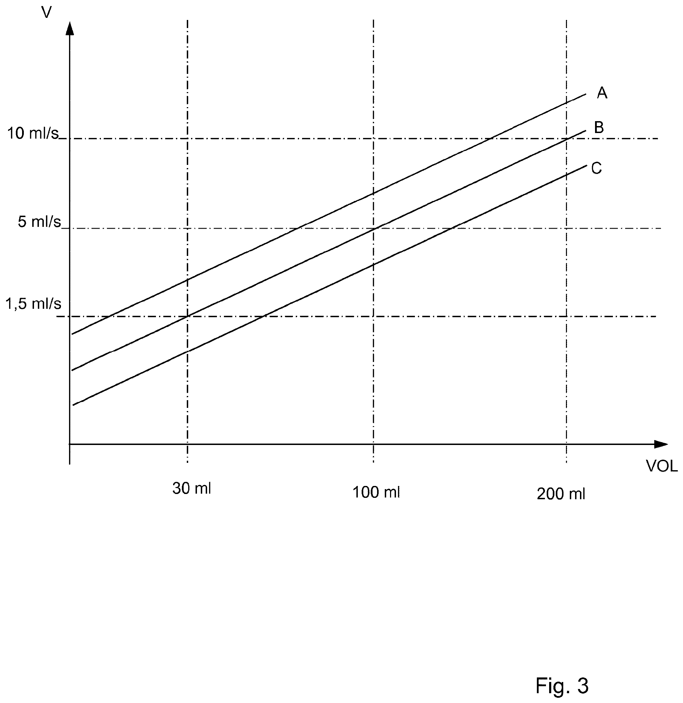

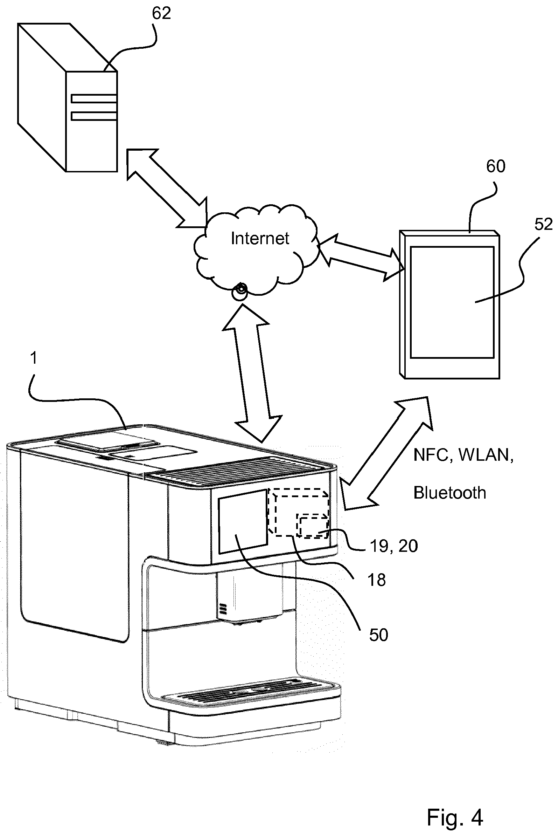

Die Steuereinrichtung 18 mit einem Mikrocontroller uC und einer Speichereinrichtung MEM dient zur Durchführung einer Getränkezubereitung, wobei hierbei die Aktivierung der Heizeinrichtung 9, der Ventile V1, V2, V3 und V4 sowie der Pumpe 8, der Brühkammer 40 und bedarfsweise weiteren Komponenten, wie einem Mahlwerk 70 durch entsprechende Signalverbindungen 31 erfolgt. In Fig. 2 ist die Signalverbindung 19 zum Motor der Pumpe 8 und zu den anderen, zu steuernden Komponenten grob skizziert, wobei die Ansteuerung der Pumpe 8 in einer bevorzugten derart erfolgt, dass verschiedene Förderleistungen eingestellt werden können. Die Steuereinrichtung 18 ist in einer bevorzugten Ausführung ferner dafür programmiert, den Servomotor 52 (Fig. 3, 4) der Ventilvorrichtung 46 zur Einstellung des Brührucks in der Brühkammer 41 zu aktivieren oder u betreiben, um unterschiedliche Drücke zum Öffnen des Ventils 46 einzustellen.

In Fig. 3 ist anhand eines Diagramms die Funktion der Steuerung für die Pumpe skizziert. Auf der X-Achse ist die gewünschte aufzubrühende bzw. zu fördernde Wassermenge und auf der Y-Achse die einzustellende Durchflussgeschwindigkeit angegeben. Mit der Kennlinie B ist eine Kontaktzeit von 20 Sekunden eingestellt. Für eine Wassermenge von 30 ml wird eine Durchflussrate von 1,5 ml/s eingestellt, sodass es nach 20 Sekunden eine Getränkemenge von 30 ml ergibt. Dies kann für einen Espresso zutreffen. Bei einer Wassermenge von 100 ml, beispielsweise für einen kleinen Kaffee, wird eine Durchflussrate oder Durchflussgeschwindigkeit von 5 ml/s eingestellt. Bei einem großen Kaffee mit 200 ml Wassermenge wird eine Durchflussrate von 10ml/s eingestellt. Für alle Wassermengen ist eine Kontaktzeit von 20 Sekunden sichergestellt.

Die Kennlinie C bewirkt eine Kontaktzeit von 25 Sekunden für alle ausgewählten Wassermengen. Für die gewählte Wassermenge von 30 ml wird eine Durchflussgeschwindigkeit von 1,2 ml/S eingestellt. Diese kann entsprechend eingestellt werden, wenn der gewählte Geschmacksparameter beispielsweise Bitter ist. Ferner kann diese Einstellung für bestimmte Kaffeesorten optimal sein, die im Brühprozess erst später die gewünschten Aromen freigeben. Bei einer vorgegebenen Wassermenge von 100 ml wird eine Durchflussgeschwindigkeit V von 4 ml/s, bei 200 ml von 8 ml/s eingestellt, um für alle Bedingungen die Kontaktzeit oder Brühzeit von 25 Sekunden einzuhalten.

Die Kennlinie A bewirkt eine Kontaktzeit von 17 Sekunden für alle ausgewählten Wassermengen VOL. Für die gewählte Wassermenge VOL = 30 ml wird eine Durchflussgeschwindigkeit von 1,8 ml/S eingestellt. Diese kann entsprechend eingestellt werden, wenn der gewählte Geschmacksparameter beispielsweise fruchtig ist, um nur die säurehaltigen Substanzen herauszulösen. Ferner kann diese Einstellung für bestimmte Kaffeesorten optimal sein, die im Brühprozess bereits sehr früh die gewünschten Aromen freigeben. Bei einer vorgegebenen Wassermenge von 100 ml wird eine Durchflussgeschwindigkeit V von 6 ml/s, bei 200 ml von 12 ml/s eingestellt, um für alle Bedingungen die Kontaktzeit oder Brühzeit von 17 Sekunden einzuhalten. Die Parallelverschiebung der Kennlinien geschieht dabei in Abhängigkeit der Kaffeesorte und der gewünschten Geschmacksnote, wie fruchtig oder bitter. Ferner kann der Mahlgrad einen Einfluss auf die Kontaktzeit haben, um bei feinerem Mahlgrad die Kontaktzeit zu vermindern und bei groben Mahlgrad die Kontaktzeit zu erhöhen.

Fig. 4 zeigt schematisch ein System, umfassend einen Heißgetränkebereiter 1 mit einer Steuereinrichtung 18, einem externen Bediengerät 60 und einer entfernten Datenverarbeitungseinheit oder Server 62. Mit dem externen Gerät 60, wie einem Smartphone, können mittels des Berührbildschirms 52 Eingaben zur Bedienung des Getränkebereiters 1 getätigt werden. Ferner können Parametrierungen vorgenommen werden, die die Kaffeesorte, das Geschmackserlebnis, den Mahlgrad und/oder die Menge VOL des zum Brühvorgang zu pumpenden Wassers. In einer bevorzugten Ausführung werden diese Informationen mittels Netzwerk, Internet oder Mobilfunk an den entfernten Server 62 gesendet. Dieser berechnet daraus einen Wert V für eine Durchflussgeschwindigkeit, der dem externen Gerät 60 gesendet wird. Das externe Gerät 60 steht wiederrum mit der Steuereinrichtung 18 des Getränkebereiters 1 in Kommunikationsverbindung, um den vom entfernten Server 62 empfangenen Wert V an die Schnittstelle 19 der Steuereinrichtung 18 zu übertragen. Die Steuereinrichtung 18 aktiviert die Pumpe 8 für den anschließend gestarteten Brühvorgang mit der empfangenen Durchflussgeschwindigkeit V.

Zur Datenübertragung zum und vom entfernten Server 62 werden Standardmittel verwendet, beispielsweise Internet, Mobilfunkstandards, WAN. Für die Kurzstreckenübertragung zwischen externem Bediengerät 60 und Getränkebereiter 1 werden Standardübertragungsmittel verwendet, beispielsweise Bluetooth, NFC, WLAN oder drahtgebundene Übertragungsmittel.

Insgesamt ist mit dem vorgenannten Getränkebereiter sichergestellt, dass sich eine Extraktionsrate von etwa 20 % einstellt, womit nur die sogenannten "guten" Geschmacksstoffe aus dem Kaffeepulver herausgelöst werden. Dies ist auch das Bestreben von anerkannten Baristi, sodass der genannte Getränkebereiter das optimale Geschmackserlebnis für eine Vielzahl von Kaffeesorten, Brüharten und Röstungen bietet.

## Patentansprüche

1. Heißgetränkebereiter (1) mit einem Strömungsleitungssystem (2) mit
- einer Wasserquelle (14)
- einer Brüheinheit (40), wobei die Brüheinheit (40) eine Brühkammer (41) zur Aufnahme von aufzubrühendem Brühgut und einer Einlassleitung (L4) zum Einlassen von Brühwasser in die Brühkammer (41),
- eine Heizeinrichtung (9) zum Erhitzen des der Brühkammer (41) zugeführten Wassers
- eine Pumpe (9), die dazu ausgebildet ist, das Wasser aus der Quelle (14) zur Brühkammer (41) zu fördern,
- eine Steuereinrichtung (18) zur Aktivierung und Deaktivierung der genannten Aktoren zur Zubereitung eines ausgewählten Getränks,
- eine Bedien- und Anzeigevorrichtung (50)
wobei die Steuereinrichtung (18) dazu eingerichtet ist, die Pumpe (9) zu aktivieren, um eine vorbestimmte Durchflussgeschwindigkeit aus einer Auswahl von verschiedenen Durchflussgeschwindigkeiten (V) für eine nachfolgende Getränkezubereitung einzustellen, wobei die Auswahl der Pumpenleistung oder Durchflussgeschwindigkeit, anhand des zuzubereitenden Getränks selbst, beispielsweise Kaffee, Espresso, Cappuccino, Americano oder sonstige Kaffeespezialitäten, erfolgt,
**dadurch gekennzeichnet,**
**dass** die Durchflussgeschwindigkeit (V) von der Kaffeesorte abhängig ist und die Kaffeesorte durch die Bedien- und Anzeigevorrichtung (50) der Steuereinrichtung (18) bekannt gegeben wird.

2. Heißgetränkebereiter nach Anspruch 1,
**dadurch gekennzeichnet,**
**dass** die Auswahl Durchflussgeschwindigkeiten (V) im Bereich von 0,5 ml/sek. bis 8 ml/sek. bereitstellt.

3. Heißgetränkebereiter nach Anspruch 1 oder 2,
**dadurch gekennzeichnet,**
**dass** die Steuereinrichtung (18) dazu eingerichtet und programmiert ist, die Durchflussgeschwindigkeit (V) abhängig von Geschmackseigenschaften einzustellen

4. Heißgetränkebereiter nach einem der Ansprüche 1 bis 3,
**dadurch gekennzeichnet,**
**dass** die Steuereinrichtung (18) dazu eingerichtet und programmiert ist, die Durchflussgeschwindigkeit (18) abhängig von der vorbestimmten Wassermenge für das ausgewählte Getränk einzustellen.

5. Heißgetränkebereiter nach einem der Ansprüche 1 bis 4, ferner umfassend ein Mahlwerk (70) zum Mahlen von Kaffeebohnen, um das Kaffeepulver der Brühkammer (41) zuzuführen,
wobei die Durchflussgeschwindigkeit (V) ist vom Mahlgrad abhängig ist.

6. Heißgetränkebereiter nach einem der Ansprüche 1 bis 5, wobei die Bedien- und Anzeigevorrichtung (50) ausgebildet ist, um Eingaben zur Auswahl des zuzubereitenden Getränks, den Geschmackseigenschaften, Mahlgrad, Kaffeesorte, und/oder Wassermenge für den Benutzer bereitzustellen, wobei die Bedien-und Anzeigevorrichtung (50) zur Übergabe der genannten Informationen mit der Steuereinrichtung (18) in Verbindung steht, **dadurch gekennzeichnet,**
**dass** die Steuereinrichtung (18) dazu eingerichtet ist, die Durchflussgeschwindigkeit (V) anhand von mehreren Bewertungsindizes festzulegen, wobei jeweils ein Bewertungsindex für eine oder mehrere der folgenden Eigenschaften vorgesehen ist:
- Geschmackseigenschaft
- Mahlgrad
- Kaffeesorte
- Wassermenge

7. Heißgetränkebereiter nach Anspruch 6,
**dadurch gekennzeichnet,**
**dass** die Steuereinrichtung (18) eine Tabelle, ein mathematisches Modell oder eine Berechnungsformel umfasst, um anhand der Eingabeinformationen den jeweiligen Bewertungsindex und die daraus resultierende Durchflussgeschwindigkeit (V) zu erzeugen.

8. Heißgetränkebereiter nach Anspruch 6,
wobei die Steuereinrichtung (18) ein Datenübertragungsmittel (19) zum Senden der Eingabeinformationen an eine entfernte Datenverarbeitungseinheit (62) und zum Empfangen von Bewertungsindizes oder bereits errechneten Gesamtindex umfasst, wobei die Steuereinrichtung (18) dazu ausgebildet ist, aufgrund des empfangenen Bewertungsindex oder Gesamtindex die dazu korrespondierende Pumpenleistung bzw. Durchflussgeschwindigkeit (V) für die nachfolgende Getränkezubereitung entsprechend einzustellen.

9. System, umfassend einen Heißgetränkebereiter (1) gemäß Anspruch 8 und ein Datenverarbeitungsgerät (62), wobei die Steuereinrichtung ein Datenübertragungsmittel (20) zum Senden der Eingabeinformationen an eine entfernte Datenverarbeitungseinheit (62) und zum Empfangen von Bewertungsindizes und/oder einem Gesamtindex umfasst, wobei die Datenverarbeitungseinheit (62) dazu ausgebildet ist, anhand der empfangenen Eingabeinformationen einen Bewertungsindex oder einen Gesamtindex zu erzeugen und diesen an die Steuereinrichtung (18) zu senden und wobei die Steuereinrichtung (18) dazu ausgebildet ist, aufgrund des empfangenen Bewertungsindex oder Gesamtindex die Pumpenleistung bzw. Durchflussgeschwindigkeit (V) für die nachfolgende Getränkezubereitung entsprechend einzustellen.

10. System nach Anspruch 9, ferner umfassend
ein externes Gerät (60) mit einer Bedien-und Anzeigevorrichtung (52) zur Bereitstellung von Eingaben zu den Geschmackseigenschaften, Mahlgrad, Kaffeesorte und/oder Wassermenge, wobei das externe Gerät (60) ein Datenübertragungsmittel zum Senden der Eingabeinformationen an eine entfernte Datenverarbeitungseinheit (62) und zum Empfangen von Bewertungsindizes oder einem Gesamtindex umfasst, wobei die entfernte Datenverarbeitungseinheit (62) dazu ausgebildet ist, anhand der empfangenen Eingabeinformationen einen Bewertungsindex oder einen Gesamtindex zu erzeugen und diesen an das externe Gerät (60) zu senden und wobei die wobei die Steuereinrichtung (18) ein Schnittstellenmittel (19) zum Empfangen der Bewertungsindizes oder des Bewertungsindex von dem externen Gerät (60) umfasst, zum Einstellen der Pumpenleistung bzw. Durchflussgeschwindigkeit (V).

11. System nach Anspruch 9 oder 10,
wobei die externe Datenverarbeitungseinheit (62) eine Tabelle, mathematisches Modell oder eine Berechnungsformel umfasst, um anhand der Eingabeinformationen den Bewertungsindex für die einzustellende Durchflussgeschwindigkeit (V) zu erzeugen.

## Claims

1. Hot beverage maker (1) having a flow line system (2) comprising
- a water source (14)
- a brewing unit (40), the brewing unit (40) a brewing chamber (41) for receiving brewing material to be brewed and an inlet line (L4) for admitting brewing water into the brewing chamber (41),
- a heating device (9) for heating the water supplied to the brewing chamber (41),
- a pump (9) designed to convey the water from the source (14) to the brewing chamber (41),
- a control device (18) for activating and deactivating said components for the preparation of a selected beverage,
- an operating and display apparatus (50)
the control device (18) being designed to activate the pump (9) in order to set a predetermined flow rate from a selection of different flow rates (V) for a subsequent beverage preparation, the pump power or flow rate being selected on the basis of the beverage to be prepared itself, for example coffee, espresso, cappuccino, americano or other coffee specialties,
**characterised in that**
the flow rate (V) depends on the type of coffee and the type of coffee is made known by the operating and display apparatus (50) of the control device (18).

2. Hot beverage maker according to claim 1,
**characterised in that**
the selection provides flow rates (V) in the range from 0.5 ml/sec. up to 8 ml/sec.

3. Hot beverage maker according to either claim 1 or claim 2,
**characterised in that**
the control device (18) is designed and programmed to set the flow rate (V) depending on flavour properties.

4. Hot beverage maker according to any of claims 1 to 3,
**characterised in that**
the control device (18) is designed and programmed to set the flow rate (18) depending on the predetermined amount of water for the selected beverage.

5. Hot beverage maker according to any of claims 1 to 4, further comprising a grinder (70) for grinding coffee beans in order to supply coffee powder to the brewing chamber (41),
wherein the flow rate (V) depends on the grinding fineness.

6. Hot beverage maker according to any of claims 1 to 5, the operating and display apparatus (50) being designed to provide the user with inputs for selecting the beverage to be prepared, the flavour properties, the grinding fineness, the type of coffee and/or the amount of water, the operating and display apparatus (50) being connected to the control device (18) in order to transfer said information,
**characterised in that**
the control device (18) is designed to determine the flow rate (V) on the basis of a plurality of evaluation indices, an evaluation index being provided in each case for one or more of the following properties:
- flavour properties
- grinding fineness
- type of coffee
- amount of water.

7. Hot beverage maker according to claim 6,
**characterised in that**
the control device (18) comprises a table, a mathematical model or a calculation formula in order to generate the relevant evaluation index and the flow rate (V) resulting therefrom on the basis of the input information.

8. Hot beverage maker according to claim 6, wherein the control device (18) comprises a data transmission means (19) for transmitting the input information to a remote data processing unit (62) and for receiving evaluation indices or an already calculated overall index, wherein the control device (18) is designed to correspondingly set the corresponding pump power or flow rate (V) for the subsequent beverage preparation on the basis of the received evaluation index or overall index.

9. System comprising a hot beverage maker (1) according to claim 8 and a data processing device (62), wherein the control device comprises a data transmission means (20)for transmitting the input information to a remote data processing unit (62) and for receiving evaluation indices and/or an overall index, wherein the data processing unit (62) is designed to generate an evaluation index or an overall index on the basis of the received input information and to transmit this index to the control device (18), and wherein the control device (18) is designed to correspondingly set the pump power or the flow rate (V) for the subsequent beverage preparation on the basis of the received evaluation index or overall index.

10. System according to claim 9, further comprising an external device (60) having an operating and display apparatus (52) for providing inputs with respect to the flavour properties, grinding fineness, type of coffee and/or amount of water, wherein the external device (60) has a data transmission means for transmitting the input information to a remote data processing unit (62) and for receiving evaluation indices or an overall index, wherein the remote data processing unit (62) is designed to generate an evaluation index or an overall index on the basis of the received input information and to transmit this index to the external device (60), and wherein the control device (18) comprises an interface means (19) for receiving the evaluation indices or the evaluation index from the external device (60) for setting the pump power or flow rate (V).

11. System according to either claim 9 or claim 10, wherein the external data processing unit (62) comprises a table, mathematical model or a calculation formula in order to generate the evaluation index for the flow rate (V) to be set on the basis of the input information.

## Revendications

1. Préparateur de boissons chaudes (1) comportant un système de conduite d'écoulement (2), comportant
- une source d'eau (14),
- une unité d'infusion (40), dans lequel l'unité d'infusion (40) une chambre d'infusion (41) permettant de recevoir l'article d'infusion à infuser et une conduite d'admission (L4) permettant d'admettre l'eau d'infusion dans la chambre d'infusion (41),
- un appareil de chauffage (9) permettant de chauffer l'eau acheminée à la chambre d'infusion (41),
- une pompe (9) conçue pour transporter l'eau de la source (14) à la chambre d'infusion (41),
- un appareil de commande (18) permettant d'activer et de désactiver lesdits composants pour la préparation d'une boisson sélectionnée,
- un dispositif de manipulation et d'affichage (50)
dans lequel l'appareil de commande (18) est configuré pour activer la pompe (9) afin de régler une vitesse d'écoulement prédéterminée à partir d'une sélection de différentes vitesses d'écoulement (V) pour une préparation de boisson ultérieure, dans lequel la sélection de la puissance de pompe ou de la vitesse d'écoulement est effectuée sur la base de la boisson à préparer particulière, par exemple un café, un expresso, un cappuccino, un americano ou d'autres spécialités de café,
**caractérisé en ce**
**que** la vitesse d'écoulement (V) dépend du type de café et le type de café est communiqué à l'appareil de commande (18) par le dispositif de manipulation et d'affichage (50).

2. Préparateur de boissons chaudes selon la revendication 1,
**caractérisé en ce**
**que** la sélection fournit des vitesses d'écoulement (V) dans la plage allant de 0,5 ml/sec à 8 ml/sec.

3. Préparateur de boissons chaudes selon la revendication 1 ou 2,
**caractérisé en ce**
**que** l'appareil de commande (18) est configuré et programmé pour régler la vitesse d'écoulement (V) en fonction de propriétés gustatives.

4. Préparateur de boissons chaudes selon l'une des revendications 1 à 3,
**caractérisé en ce**
**que** l'appareil de commande (18) est configuré et programmé pour régler la vitesse d'écoulement (18) en fonction de la quantité d'eau prédéterminée pour la boisson sélectionnée.

5. Préparateur de boissons chaudes selon l'une des revendications 1 à 4, comprenant en outre un moulin (70) permettant de moudre des grains de café afin d'acheminer la poudre de café à la chambre d'infusion (41),
dans lequel la vitesse d'écoulement (V) dépend du degré de mouture.

6. Préparateur de boissons chaudes selon l'une des revendications 1 à 5, dans lequel le dispositif de manipulation et d'affichage (50) est configuré pour fournir à l'utilisateur des entrées pour la sélection de la boisson à préparer, des propriétés gustatives, du degré de mouture, du type de café et/ou de la quantité d'eau, dans lequel le dispositif de manipulation et d'affichage (50) est connecté à l'appareil de commande (18) pour le transfert desdites informations,
**caractérisé en ce**
**que** l'appareil de commande (18) est configuré pour spécifier la vitesse d'écoulement (V) sur la base de plusieurs indices d'évaluation, dans lequel respectivement un indice d'évaluation est prévu pour une ou plusieurs des propriétés suivantes :
- propriété gustative
- degré de mouture
- type de café
- quantité d'eau.

7. Préparateur de boissons chaudes selon la revendication 6,
**caractérisé en ce**
**que** l'appareil de commande (18) comprend un tableau, un modèle mathématique ou une formule de calcul pour générer l'indice d'évaluation respectif et la vitesse d'écoulement (V) en résultant sur la base des informations d'entrée.

8. Préparateur de boissons chaudes selon la revendication 6,
dans lequel l'appareil de commande (18) comprend un moyen de transmission de données (19) permettant d'envoyer les informations d'entrée à une unité de traitement de données (62) distante et permettant de recevoir des indices d'évaluation ou un indice global déjà calculé, dans lequel l'appareil de commande (18) est configuré pour, grâce à l'indice d'évaluation ou à l'indice global reçu, régler en conséquence la puissance de pompe ou la vitesse d'écoulement (V) correspondante pour la préparation de boisson ultérieure.

9. Système, comprenant un préparateur de boissons chaudes (1) selon la revendication 8 et un appareil de traitement de données (62), dans lequel l'appareil de commande comprend un moyen de transmission de données (20) permettant d'envoyer les informations d'entrée à une unité de traitement de données (62) distante et permettant de recevoir des indices d'évaluation et/ou un indice global, dans lequel l'unité de traitement de données (62) est configurée pour générer un indice d'évaluation ou un indice global sur la base des informations d'entrée reçues et pour l'envoyer à l'appareil de commande (18), et dans lequel l'appareil de commande (18) est configuré pour, grâce à l'indice d'évaluation ou à l'indice global reçu, régler en conséquence la puissance de pompe ou la vitesse d'écoulement (V) pour la préparation de boisson ultérieure.

10. Système selon la revendication 9, comprenant en outre
un appareil externe (60) comportant un dispositif de manipulation et d'affichage (52) permettant de fournir des entrées concernant les propriétés gustatives, le degré de mouture, le type de café et/ou la quantité d'eau, dans lequel l'appareil externe (60) comprend un moyen de transmission de données permettant d'envoyer les informations d'entrée à une unité de traitement de données (62) distante et permettant de recevoir des indices d'évaluation ou un indice global, dans lequel l'unité de traitement de données (62) distante est configurée pour générer un indice d'évaluation ou un indice global sur la base des informations d'entrée reçues et pour l'envoyer à l'appareil externe (60) et dans lequel l'appareil de commande (18) comprend un moyen d'interface (19) permettant de recevoir les indices d'évaluation ou l'indice d'évaluation en provenance de l'appareil externe (60) afin de régler la puissance de pompe ou la vitesse d'écoulement (V).

11. Système selon la revendication 9 ou 10,
dans lequel l'unité de traitement de données (62) externe comprend un tableau, un modèle mathématique ou une formule de calcul pour générer l'indice d'évaluation pour la vitesse d'écoulement (V) à régler sur la base des informations d'entrée.
